(19) Europäisches Patentamt

European Patent Office

Office européen des brevets

(11) EP 2 560 065 A1

## (12) EUROPEAN PATENT APPLICATION
published in accordance with Art. 153(4) EPC

(43) Date of publication:
**20.02.2013 Bulletin 2013/08**

(21) Application number: **11768744.2**

(22) Date of filing: **05.04.2011**

(51) Int Cl.:
**G05F 1/70** (2006.01)  **H02J 3/26** (2006.01)

(86) International application number:
**PCT/JP2011/058567**

(87) International publication number:
**WO 2011/129223 (20.10.2011 Gazette 2011/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.04.2010 JP 2010091896**

(71) Applicant: **Hitachi, Ltd.**
**Chiyoda-ku**
**Tokyo 100-8280 (JP)**

(72) Inventors:
 • **INOUE, Shigenori**
  **Hitachi-shi**
  **Ibaraki 319-1292 (JP)**
 • **KATOH, Shuji**
  **Hitachi-shi**
  **Ibaraki 319-1292 (JP)**

(74) Representative: **Strehl Schübel-Hopf & Partner**
**Maximilianstrasse 54**
**80538 München (DE)**

## (54) POWER CONVERTER

(57)     In relation to a three-phase power converter that is formed with three clusters, each of which is a serial body including one or a plurality of unit cells, a circuit system and control method used by the three-phase power converter to output negative-phase sequence currents are provided.

In a power converter that has a delta-connected cascade multi-level converter (CMC) linked to a power supply system, the CMC being formed by delta-connecting series circuit, each of which is formed with a reactor and a cluster, the cluster being a serial body formed with one or a plurality of unit cells, a positive-phase sequence reactive current and a negative-phase sequence current caused by an unbalanced load linked to the power supply system are substantially offset by a positive-phase sequence reactive current and a negative-phase sequence current that are simultaneously output by the power converter.

*FIG. 1*

EP 2 560 065 A1

**Description**

FIELD OF THE INVENTION

The present invention relates to a power converter, and more particularly to a three-phase power converter formed with three clusters, each of which is a series circuit including one or a plurality of unit cells.

BACKGROUND OF THE INVENTION

A cascade multi-level converter (CMC) is a circuit system that can output voltages equal to or higher than the withstand voltages of switching elements used therein; the switching elements are, for example, insulated gate bipolar transistors (IGBTs) and other switching elements that can be turned on and off in a controlled manner. According to NON-PATENT LITERATURE (NPL) 1, the CMC is formed by star-connecting three series circuits, each of which is formed with a reactor and a cluster, the cluster being a series circuit formed with a plurality of unit cells.

According to NPL 1, each unit cell is a single-phase full bridge circuit; it has a plurality of switching elements and a DC capacitor. The unit cell turns on and off the switching elements in a controlled manner to output a voltage across the DC capacitor (referred to below as the DC voltage), a voltage with a polarity opposite to the polarity of the DC voltage, or a zero-voltage.

Since each cluster is a series circuit having one or a plurality of unit cells, the output voltage of the cluster (referred to below as the cluster voltage) is the output voltage of the one unit cell included in the cluster or the sum of the output voltages of the plurality of unit cells therein. When each cluster includes a plurality of unit cells, if the switching timing of each unit cell in the cluster is appropriately shifted, the cluster voltage can have a multi-level waveform. Accordingly, the harmonic component of the cluster voltage can be reduced by increasing the number of unit cells included in each cluster.

NPL 1 indicates experimental results of a CMC-based static var compensator (referred to below as the CMC-STATCOM), in which a CMC is linked to a power supply system.

PRIOR TECHNICAL LITERATURE

NON-PATENT LITERATURE (NPL)

NPL 1: Yoshii, Inoue, Akagi "Transuresu kasukedo PWM STATCOM no chokuryudenatsuseigyoho no kento (Zero-sequence voltage control of a cascade PWM converter with star-configuration)" IEE-SPC and IEE-IEA materials, SPC-07-115/IEA-07-38, pp. 32-36

SUMMARY OF THE INVENTION

{Technical Problem}

When an arc furnace or another unbalanced load is connected to a power supply system, a negative-phase sequence current flowing out of the unbalanced load causes an unbalanced voltage drop in the impedance of the power supply system. As a result, the voltage of a power supply system (referred to below as the power supply system voltage) in the vicinity is unbalanced.

One method of suppressing the power supply system voltage from being unbalanced by an unbalanced load is to link a power converter in the vicinity of the unbalanced load and output a negative-phase sequence current having a phase opposite to the phase of the negative-phase sequence current of the unbalanced load.

However, NPL 1 discloses results of experiments in which the CMC-STATCOM output only positive-phase sequence reactive currents and does not disclose a circuit system and control method applied to a case in which negative-phase sequence currents are output.

{Solution to Problem}

When a CMC formed by star-connecting three clusters outputs a negative-phase sequence current, active electric power that flows into each cluster is unbalanced, so the DC voltage of each unit cell included in each cluster is continuously increased or decreased.

To address the above problem, the present invention provides a solution described below.

The present invention provides a power converter that has a delta-connected cascade multi-level converter (CMC) linked to a power supply system, the CMC being formed by delta-connecting series circuits, each of which is formed with a reactor and a cluster, the cluster being a series circuit formed with one or a plurality of unit cells.

In a power converter that has a delta-connected cascade multi-level converter (CMC) linked to a power supply system, the CMC being formed by delta-connecting series circuits, each of which is formed with a reactor and a cluster, the cluster being a series circuit formed with one or a plurality of unit cells, the present invention provides a power converter that has a function by which a positive-phase sequence reactive current and a negative-phase sequence current caused by an unbalanced load linked to the power converter are substantially compensated by a positive-phase sequence reactive current and a negative-phase sequence current that are simultaneously output by the power converter.

In a power converter that has a delta-connected cascade multi-level converter (CMC) linked to a power supply system, the CMC being formed by delta-connecting series circuits, each of which is formed with a reactor and a cluster, the cluster being a series circuit formed with one or a plurality of unit cells, the present invention provides a power converter that has a function by which a voltage across a DC capacitor in each cell is balanced.

In a power converter that has a delta-connected cascade multi-level converter (CMC) linked to a power supply system, the CMC being formed by delta-connecting series circuits, each of which is formed with a reactor and a cluster, the cluster being a series circuit formed with one or a plurality of unit cells, the present invention provides a power converter that has a function by which if the phase angle of the positive-phase sequence component included in a voltage of the power supply system is denoted $\phi1$ and the negative-phase sequence current command value of the power converter or the root-mean-square value of an actual negative-phase sequence current and the phase angle of the current are respectively denoted I2 and $\delta2$, each cluster flows a circulating current having root-mean-square value I0 and phase angle $\delta0$, which are represented by the equations below.

{Eq. 1}

$$I0 = I2$$

{Eq. 2}

$$\delta0 = 2 \times \phi1 - \delta2 \pm \pi$$

In a power converter that has a delta-connected cascade multi-level converter (CMC) linked to a power supply system, the CMC being formed by delta-connecting series circuits, each of which is formed with a reactor and a cluster, the cluster being a series circuit formed with one or a plurality of unit cells, the present invention provides a power converter characterized in that the power converter has a function by which if the root-mean-square value and phase angle of the positive-phase sequence component included in the voltage of the power supply system are respectively denoted V1 and $\phi1$, the root-mean-square value and phase angle of the negative-phase sequence component included in the voltage of the power supply system are respectively denoted V2 and $\phi2$, the command value of the current that flows into the cluster or the root-mean-square value of the positive-phase sequence component of an actual current and the phase angle of the positive-phase sequence component are respectively denoted I1 and $\delta1$, and the root-mean-square value and phase angle of the negative-phase sequence component of the actual current are respectively denoted I2 and $\delta2$, each cluster outputs a circulating current having root-mean-square value I0 and phase angle $\delta0$, which are substantially represented by the equations below.

{Eq. 3}

$$I0 = -(I1 \times V2 \times \cos(\delta1 - \phi2) + I2 \times V1 \times \cos(\delta2 - \phi1))/(V1 \times \cos(\delta0 - \phi1) + V2 \times \cos(\delta0 - \phi2))$$

{Eq. 4}

$$\delta 0 = \tan^{-1} ((I1 \times V2 \times (V1 \times \sin(\delta 1 + \phi 1 - \phi 2) + V2 \times \sin(\delta 1 - 2 \times \phi 2)) - I2 \times V1 \times (V2 \times \sin(\delta 2 + \phi 2 - \phi 1) + V1 \times \sin(\delta 2 - 2 \times \phi 1)))/(I1 \times V2 \times (V1 \times \cos(\delta 1 + \phi 1 - \phi 2) + V2 \times \cos(\delta 1 - 2 \times \phi 2)) - I2 \times V1 \times (V2 \times \cos(\delta 2 - \phi 2 + \phi 1) - V1 \times \cos(\delta 2 - 2 \times \delta 1))))$$

In a power converter that has a delta-connected cascade multi-level converter (CMC) linked to a power supply system, the CMC being formed by delta-connecting series circuits, each of which is formed with a reactor and a cluster, the cluster being a series circuit formed with one or a plurality of unit cells, the present invention also provides a power converter characterized in that moving average calculation in which a half cycle of the frequency of the power supply system or its integer multiple is handled as a time window is used in the detection of V1, $\phi 1$, V2, $\phi 2$, I1, $\delta 1$, I2, and $\delta 2$.

{Advantageous Effects of Invention}

When the amplitude and phase of the circulating current are controlled as in the present invention, the voltage and current of each of the three clusters are made orthogonal in a state in which a positive-phase sequence reactive current and a negative-phase sequence current are flowing simultaneously in each cluster. Accordingly, active electric power does not flow into each cluster.

According to the present invention, therefore, a positive-phase sequence reactive current from an unbalanced current and a negative-phase sequence current can be compensated by using a power converter formed with three series circuits, each of which is formed with a reactor and a cluster, the cluster being a series circuit formed with one or a plurality of unit cells.

BRIEF DESCRIPTION OF THE DRAWINGS

FIG. 1 shows is a main circuit diagram of a delta-connected CMC-STATCOM.
FIG. 2 shows a unit cell of full bridge type.
FIG. 3 is a control block diagram.
FIG. 4 shows a compensating current command value calculator.
FIG. 5 shows a feedforward calculator.
FIG. 6 shows a cluster balancing controller.
FIG. 7 shows examples of waveforms in the present invention.
FIG. 8 shows a negative-phase sequence voltage ready feedforward calculator.
FIG. 9 is a control block in which actual currents are used.
FIG. 10 shows a feedforward calculator that uses actual currents.

DESCRIPTION OF THE PREFERRED EMBODIMENTS

Embodiments of the present invention will be described below with reference to the drawings.

{Embodiment 1}

A first embodiment of the present invention will be described below.

In the first embodiment, a positive-phase sequence reactive current from an unbalanced current and a negative-phase sequence current can be compensated by using a power converter formed with three series circuits, each of which is formed with a reactor and a cluster, the cluster being a series circuit formed with one or a plurality of unit cells.

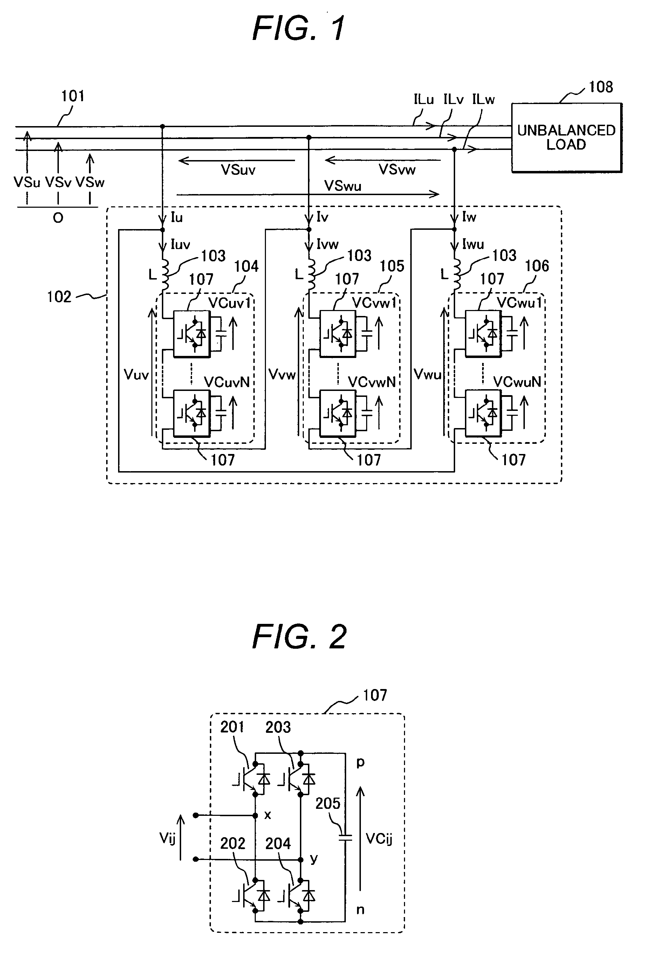

A whole structure in the first embodiment will be described below with reference to FIG. 1.

A power converter 102 connected to a power supply system 101 includes three reactors 103, a uv-phase cluster 104, a vw-phase cluster 105, and a wu-phase cluster 106. In this description, the uv-, vw-, and wu-phase clusters 104 to 106 may not be distinguished but may be simply referred to as clusters.

One reactor 103 is connected in series with each of the clusters 104 to 106. One end of a series circuit formed with the uv-phase cluster 104 and the reactor 103 is connected to the u-phase of the power supply system, and the other end is connected to the v-phase. One end of a series circuit formed with the vw-phase cluster 105 and the reactor 103 is connected to the v-phase of the power supply system, and the other end is connected to the w-phase. One end of a series circuit formed with the wu-phase cluster 106 and the reactor 103 is connected to the w-phase of the power supply system, and the other end is connected to the u-phase.

Each of the clusters 104 to 106 is a series circuit formed with one or a plurality of unit cells 107. In FIG. 1, N unit cells are connected in each cell. In the clusters 104 to 106, the unit cells are called a first cell, a second cell, and so on, starting from the unit cell closest to the reactor 103. The internal structure of the unit cell 107 will be described later.

An unbalanced load 108 is connected to the power supply system 101. The unbalanced load 108 draws all of a positive-phase sequence active current, a positive-phase sequence reactive current, and a negative-phase sequence current or a combination of these currents from the power supply system 101.

Voltages and currents will be defined below.

Phase voltages of the power supply system 101 are denoted VSu, VSv, and VSw. A point O is a virtual neutral point at which the sum of VSu, VSv, and VSw becomes 0. The line-to-line voltages of the power supply system 101 are denoted VSuv, VSvw, and VSwu.

Currents that flow from the power supply system 101 into the power converter 102 are denoted Iu, Iv, and Iw. Currents that flow into the reactors 103 and the clusters 104 to 106 are denoted Iuv, Ivw, and Iwu.

Output voltages (cluster voltages) from the clusters 104 to 106 are denoted Vuv, Vvw, and Vwu.

Furthermore, a DC voltage of the unit cell included in each of the clusters 104 to 106 is denoted VCij (i = uv, vw, wu). If N unit cells 107 are included in each cluster, j is 1, 2, ..., or N.

The internal structure of the unit cell 107 will be described below with reference to FIG. 2. FIG. 2 shows i-phase cell j (i = uv, vw, wu, j = 1, 2, ..., N).

The unit cell 107 is a single-phase full bridge circuit including an x-phase upper element 201, an x-phase lower element 202, a y-phase upper element 203, a y-phase lower element 204, and a DC capacitor 205. The unit cell 107 controls the switching of the elements 201 to 204 to output voltage Vij at a point x, relative to a point y, that is set to 0, VCij, or -VCij.

In FIG. 2, the elements 201 to 204 are each represented with a symbol of an IGBT. However, they may be gate turn-off thyristors (GTOs), gate-commutated turn-off thyristors (GCTs), metal-oxide-semiconductor field-effect transistors (MOSFETs), or other types of switching elements that can be tuned on and off in a controlled manner, instead of IGBTs.

Each of the clusters 104 to 106 shown in FIG. 1 is a series circuit including M unit cells 107, as described above. Therefore, each of cluster voltages Vuv, Vvw, and Vwu is the sum of output voltage Vij of M unit cells 107. These voltages can be represented as Vuv = Vuv1 + Vuv2 + ... + VuvN, Vvw = Vvw1 + Vvw2 + ... + VvwN, and Vwu = Vwu1 + Vwu2 + ... + VwuN.

When the unit cells undergo pulse-width modulation (PWM) control, therefore, the cluster voltages Vuv, Vvw, and Vwu can be controlled.

Unless otherwise noted, this description will explain the principle and effects of the present invention, focusing on fundamental wave components included in clusters voltages Vuv, Vvw and Vwu and currents Iuv, Ivw and Iwu that flow into the respective reactors 103 and clusters 104 to 106.

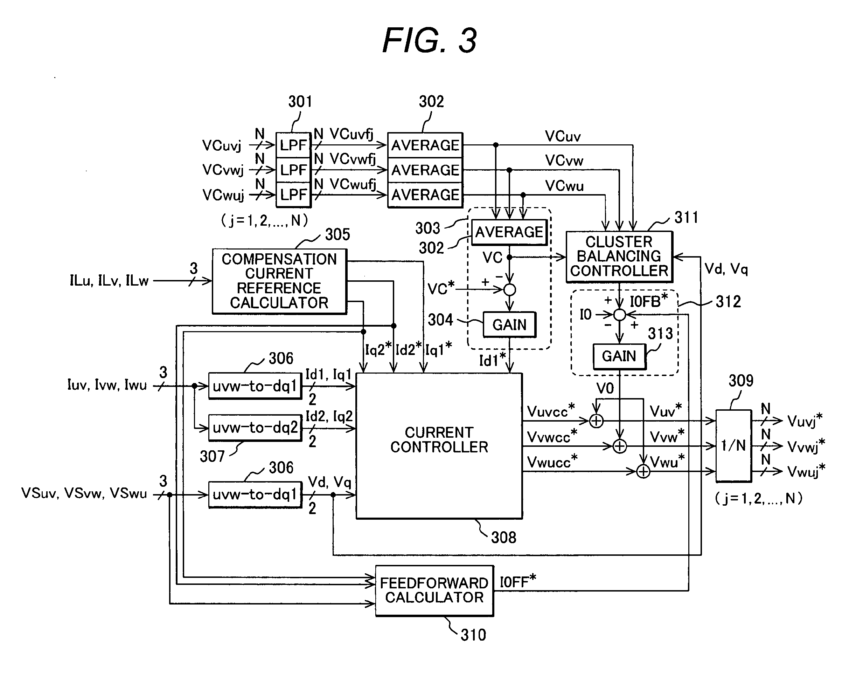

The method of controlling the power converter in the present invention and the principle of the present invention will be described with reference to FIG. 3.
FIG. 3 shows control blocks, in the controller, that are not shown in FIG. 1.

The controller detects line voltages VSuv, VSvw, and VSwu of the power supply system 101 and performs positive-phase sequence dq conversion on these detected line voltages to obtain positive-phase sequence d-axis voltage Vd and positive-phase sequence q-axis voltage Vq. The controller also detects currents Iuv, Ivw, and Iwu that flow into the respective reactors and performs positive-phase sequence dq conversion on these detected currents to obtain positive-phase sequence d-axis current Id1 and positive-phase sequence q-axis current Iq1. The controller further detects currents Iuv, Ivw, and Iwu that flow into their respective reactors 103 and performs negative-phase sequence dq conversion on these detected currents to obtain negative-phase sequence d-axis current Id2 and negative-phase sequence q-axis current Iq2. The controller gives obtained Vd, Vq, Id1, Iq1, Id2, and Iq2 to a current controller 308.

In this description, it is assumed that all the reference phase angles of a positive-phase sequence dq converting block 306 and a negative-phase sequence dq converting block are substantially in synchronization with uv-phase line voltage VSuv of the power supply system 101.

The current controller calculates cluster voltage commands Vuvcc*, Vvwcc*, and Vwucc* to be output from the current controller so that currents Id1, Iq1, Id2, and Iq2 match their respective command values Id1*, Iq1*, Id2*, and Iq2*.

Positive-phase sequence d-axis current command value id1* and other current command values Iq1*, Id2*, and Iq2* are given in different methods.

Positive-phase sequence d-axis current command value id1* is given by a total average DC voltage controller 303.

Positive-phase sequence q-axis current command value Iq1*, negative-phase sequence d-axis current command value Id2*, and negative-phase sequence q-axis current command value Iq2* are given from currents ILu, ILv, and ILw of the unbalanced load 108 (referred to below as load currents) through a compensating current value calculator 305. The internal structure of the compensating current value calculator 305 will be described later.

The controller detects DC voltages VCuvj, VCvwj, and VCwuj of the unit cells 107 and allows these voltages to pass through low-pass filter (LPF) 301 to obtain VCuvfj, VCvwfj, and VCwufj (j = 1, 2, ..., N).

An average calculator 302 calculates average DC voltages VCu, VCv, and VCw (referred to below as cluster average DC voltages) in the clusters according to the equations below.

$$\{Eq. \ 5\}$$

$$VCuv \ = \ (VCuvf1 \ + \ VCuvf2 \ + \ … \ + \ VCuvfN)/N$$

$$VCvw \ = \ (VCvwf1 \ + \ VCvwf2 \ + \ … \ + \ VCvwfN)/N$$

$$VCwu \ = \ (VCwuf1 \ + \ VCwuf2 \ + \ … \ + \ VCwufN)/N$$

The total average DC voltage controller 303 calculates the average (referred to below as the total average DC voltage) VC of VCuv, VCvw, and VCwu (VC = (VCuv + VCvw + VCwu)/3), multiplies error between command value VC* and VC by a total average DC voltage control gain 304 to calculate positive-phase sequence d-axis current command value Id1*, and gives calculated Id1* to the current controller 308.

A feedforward calculator 310 uses negative-phase sequence d-axis command value Id2*, negative-phase sequence q-axis command value Iq2*, and system voltages VSuv, VSvw and VSwu to calculate a circulating current command value feedforward term I0FF* by which active electric power that flows into the clusters 104 to 106 and active electric power output from there are made zero.

A cluster balancing controller 311 uses cluster average DC voltages VCuv, VCvw and VCwu and the total average DC voltage VC to calculate a circulating current command value feedback term I0FB*, which is used in cluster balancing control. Thus, the cluster balancing controller 311 provides a function that balances the DC voltage of each unit cell. The internal structure of the cluster balancing controller 311 will be described later.

A circulating current controller 312 compares the sum of the circulating current command value feedforward term I0FF* and circulating current command value feedback term I0FB* (I0FF* + I0FB*) with the actual circular current I0 and performs a multiplication by a circulating current control gain 313 to calculate a zero-phase sequence voltage command value V0. The circulating current controller 312 further adds cluster voltage command values Vuvcc*, Vvwcc*, and Vwucc* supplied from the current controller to the obtained V0 to obtain cluster voltage command values Vuv*, Vvw*, and Vwu*.

A voltage command value divider 309 divides cluster voltage command values Vuv*, Vvw*, and Vw* by cell count N and distributes output voltage command value Vij* (i = uv, vw, wu, j = 1, 2, ..., N) to the unit cells 107.

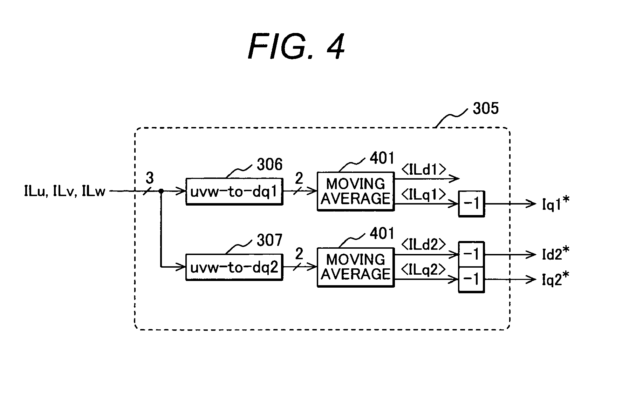

The internal structure of the compensating current value calculator 305 will be described below with reference to FIG. 4.

The compensating current value calculator 305 detects load currents ILu, ILv and ILw and calculates positive-phase sequence d-axis current <ILd1> and positive-phase sequence q-axis current <ILq1> through the positive-phase sequence dq converting block and a moving average calculator 401. The compensating current value calculator 305 also calculates negative-phase sequence d-axis current <ILd1> and negative-phase sequence q-axis current <ILq1> from ILu, ILv, and ILw through the negative-phase sequence dq converting block and the moving average calculator 401. The time window of the moving average calculator 401 is a half cycle of the power supply system or its integer multiple.

Three currents of the obtained <ILd1>, <ILq1>, <ILd2>, and <ILq2>, excluding <ILd1>, cause a voltage drop in the reactance component of the background line impedance (not shown) of the power supply system 101.

Positive-phase sequence q-axis current <ILq1> of the load changes the amplitude of the system voltage. Negative-phase sequence d-axis and q-axis currents <ILd2> and <ILq2> of the load increase the imbalance ratio of the system voltage. Accordingly, it is desirable to output currents having phases opposite to the phases of <ILq1>, <ILd2>, and <ILq2> from the power converter 102 to suppress the change in the amplitude of the system voltage and the increase in the imbalance ratio.

Therefore, current command values Iq1*, Id2*, and Iq2* of the power converter 102 are given by using the

equations below.

$$\{Eq. \ 6]$$

$$Iq1* \ = \ -<ILq1>$$

$$Id2* \ = \ -<ILd2>$$

$$Iq2* \ = \ -<ILq2>$$

As described above, the current controller 308 controls actual currents Iq1, Id2, and Iq2 so that they match given current command values Iq1*, Id2*, and Iq2*.

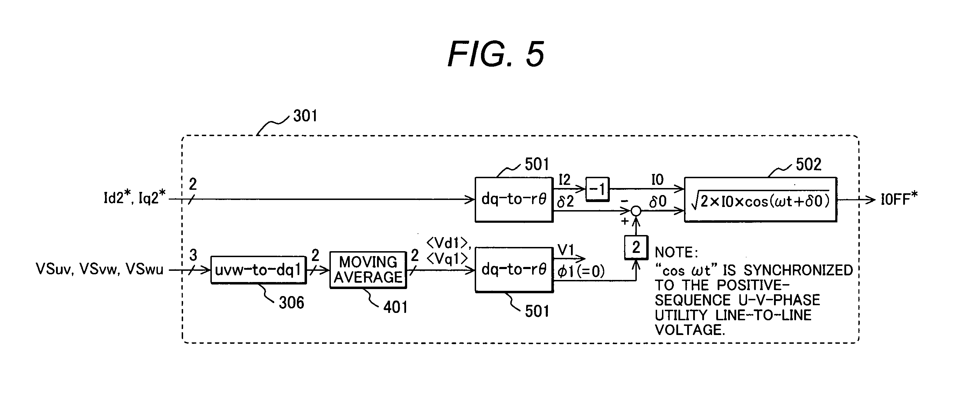

The internal structure of the feedforward calculator 310 will be described with reference to FIG. 5.

The feedforward calculator 310 obtains negative-phase sequence current root-mean-square value I2 and positive-phase sequence current phase angle $\delta 2$ from the absolute value and angle of vector [Id2*, Iq2*] of given current command values Id2* and Iq2* through an orthogonal coordinate-polar coordinate converting block 501.

The feedforward calculator 310 also uses the positive-phase sequence dq converting block 306 to perform negative-phase sequence dq conversion on phase voltages VSu, VSv, and VSw of the power supply system 101, and calculates a moving average in which a half cycle of the power supply system is handled as a time window through the moving average calculator 401, obtaining positive-phase sequence d-axis voltage <Vd1> and positive-phase sequence q-axis voltage <Vq1>. The feedforward calculator 310 also obtains positive-phase sequence voltage root-mean-square value V1 and negative-phase sequence voltage phase angle $\phi 1$ from the sizes and amplitudes of vectors [<Vd2>, <Vq2>] through the orthogonal coordinate-polar coordinate converting block 501.

The inventors found from I2, $\delta 2$, V1, and $\phi 1$ obtained above that active electric power that flows into the clusters 104 to 106 can be made zero by applying the circulating current command value feedforward term I0FF*, which has root-mean-square value I0 and phase angle $\delta 0$ represented by the equations below, to the clusters. The mechanism of the present invention will be described later.

$$\{Eq. \ 7\}$$

$$I0 \ = \ I2$$

$$\{Eq. \ 8\}$$

$$\delta 0 \ = \ 2 \ \times \ \phi 1 \ - \ \delta 2 \ \pm \ \pi$$

Even if the above equations are rewritten as the equations below, they are mathematically equivalent. In the block diagram in FIG. 5, the equations below are used.

$$\{Eq. \ 9\}$$

$$I0 \ = \ -I2$$

$$\{Eq. \ 10\}$$

$$\delta 0 \ = \ 2 \ \times \ \phi 1 \ - \ \delta 2$$

A sine wave generator 502 generates the circulating current command value feedforward term I0FF* as a sine wave signal having root-mean-square value I0 and phase angle $\delta 0$.

Instead of an algorithm that is completely the same as in the block diagram shown in FIG. 4, the feedforward calculator 310 can also use another algorithm if signals that are mathematically equivalent to the equations in [Eq. 7] to [Eq. 10] can be output.

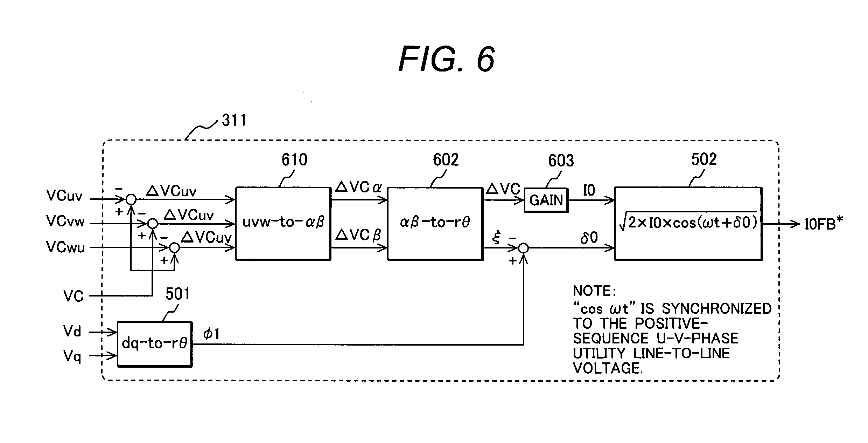

The internal structure of the cluster balancing controller 311 will be described with reference to FIG. 6.

The cluster balancing controller 311 calculates ΔVCuv, ΔVCvw, and ΔVCwu, which are respectively differences between the given total average DC voltage VC and cluster average DC voltages VCuv, VCvw and VCwu. The cluster balancing controller 311 then performs αβ conversion on the obtained ΔVCuv, ΔVCvw, and ΔVCwu by using an αβ converting block 601 and obtains [ΔVCα, ΔVCβ] as a vector on an αβ axis. The cluster balancing controller 311 further calculates the sizes ΔVC and amplitude ξ of vectors [ΔVCα, ΔVCβ] through an orthogonal coordinate-polar coordinate converting block 602.

The cluster balancing controller 311 also calculates amplitude $\phi1$ of vectors [Vd, Vq], that is, the phase angle of the line-to-line voltage between phases u and v of the power supply system, from vectors [Vd, Vq] of given positive-phase sequence d-axis voltage Vd and positive-phase sequence q-axis voltage Vq though the orthogonal coordinate-polar coordinate converting block 501.

The sine wave generator 502 outputs the circulating current command value feedback term I0FB* as a sine wave signal that has root-mean-square value I0, which is obtained by multiplying ΔVC by a cluster balancing control gain 603, and phase angle δ0 (= $\phi1 - ξ$).

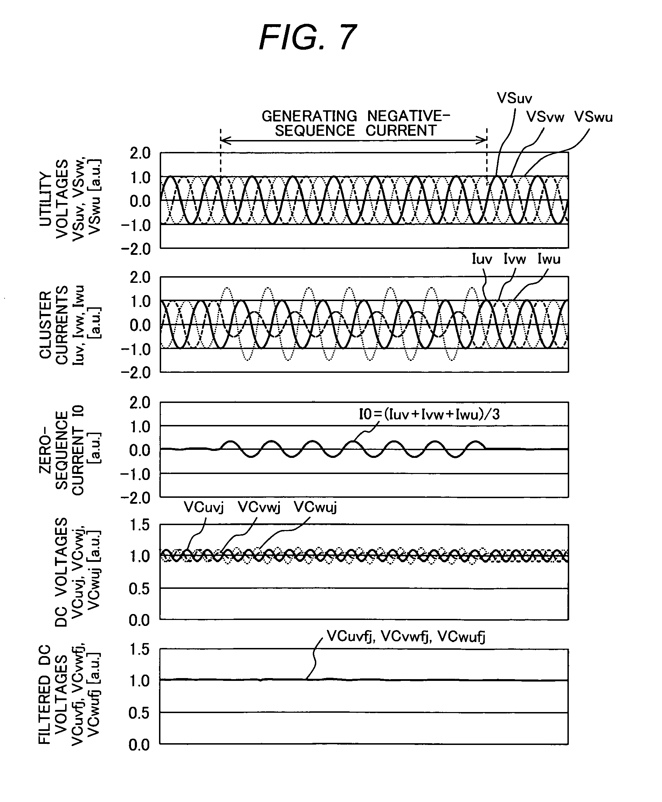

Effects obtained by the present invention will be described with reference to FIG. 7.

FIG. 7 shows schematic waveforms of each part in a case in which control in the present invention has been carried out. The waveforms at the top are schematic waveforms of line-to-line voltages VSuv, VSvw, and VSwu of the power supply system 101, followed by schematic waveforms of currents Iuv, Ivw, and Iwu that flow into the their respective reactors 103 and clusters 104 to 106, a schematic waveform of the circular current (I0FF + I0FB), schematic waveforms of DC voltages VCuvj, VCvwj, and VCwuj, and schematic waveforms of DC voltages VCuvfj, VCvwfj, and VCwufj observed after they have passed through the LPFs 301 in that order. The waveforms in FIG. 7 are drawn, assuming that circular current command value 10 ideally follows the command value (I0FF* + I0FB*).

In FIG. 7, the horizontal axis indicates time or phase angle, and the vertical axis indicates amplitudes of voltage and current in an arbitrary unit (a.u.).

In the period during which currents Iuv, Ivw, and Iwu include a negative-phase sequence current, circulating current 10 is flowing.

The mechanism in the present invention will be described below.

When circulating current 10 controlled by the circulating current controller 312 is superimposed on currents Iuv*, Ivw*, and Iwu* flowing in their respective reactors 103 and the clusters 104 to 106, even if Iuv, Ivw, and Iwu include a negative-phase sequence component, a phase difference between Vuv and Iuv, a phase difference between Vvw and Ivw, and a phase difference between Vwu and Iwu become 90 degrees. That is, active electric power that flows into each cluster and active electric power output from there become zero. Accordingly, active electric power that flowed into each cluster and outputs from there becomes zero, suppressing the DC voltage from being unbalanced.

In the present invention, the zero-phase sequence feedback term I0FB* plays a role of suppressing the DC voltages from being unbalanced due to variations in the characteristics of parts in use and other factors.

With the power converter 102 in this embodiment, the clusters 104 to 106 are connected to the power supply system 101 through their respective reactors 103.

The present invention can also be applied to a case in which the clusters 104 to 106 are each connected to the power supply system 101 through a transformer instead of the reactor 103.

The present invention can also be applied to a case in which the clusters 104 to 106 are each connected to the power supply system 101 through both the rector 103 and a transformer.

{Embodiment 2}

A second embodiment of the present invention will be described below.

In the first embodiment, negative-phase sequence current command values Id2* and Iq2* have been given to the feedforward calculator 310. In the second embodiment, however, actual negative-phase sequence currents Id2 and Iq2 are given instead of Id2* and Iq2*.

Accordingly, even if the current controller 308 cannot control currents as intended due to some disturbance, that is, even if Id2 is not Id2* or Iq2 is not Iq2*, the effect that active electric power that flows into the clusters 104 to 106 can be made approximately zero is obtained.

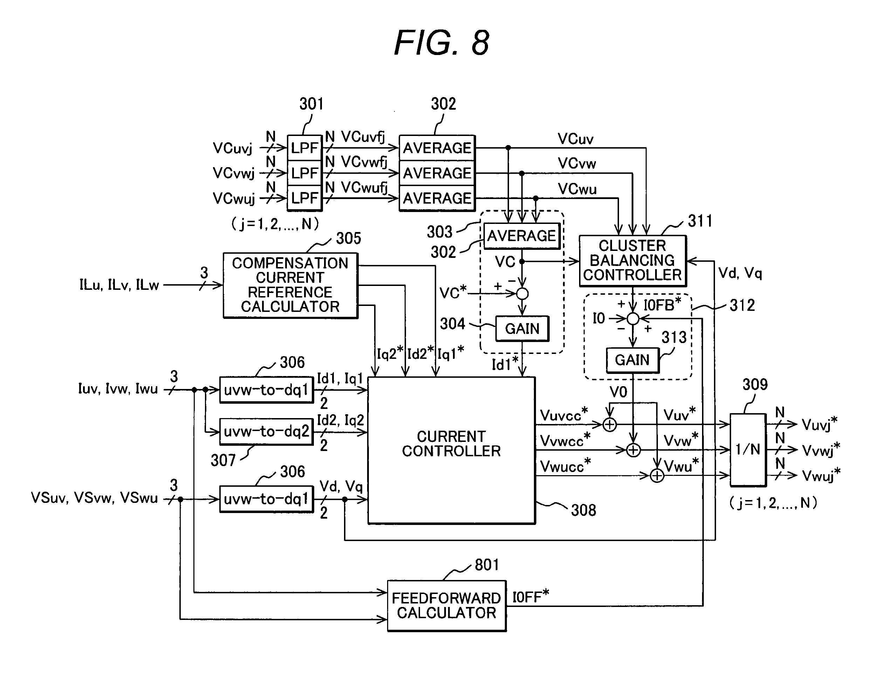

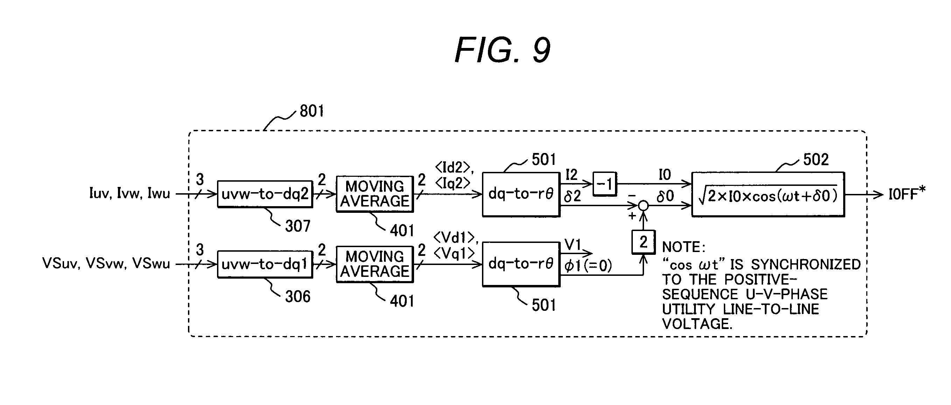

Differences between the first embodiment and the second embodiment lie in the control block and feedforward calculator. Accordingly, the control block and feedforward calculator in the second embodiment will be described below with reference to FIGs. 8 and 9.

In the control block in FIG. 8, currents Iuv, Ivw, and Iwu are given to a feedforward calculator 801.

Next, the internal structure of the feedforward calculator 801 will be described with reference to FIG. 9.

The feedforward calculator 801 uses a negative-phase sequence dq converting block 307 to perform negative-phase sequence dq conversion on currents Iuv, Ivw, and Iwu, and calculates a moving average in which a half cycle of the power supply system is handled as a time window through the moving average calculator 401, obtaining negative-phase sequence d-axis current <Id2> and negative-phase sequence q-axis current <Iq2>. The feedforward calculator 801 also obtains root-mean-square value I2 and phase angle $\delta 2$ of the negative-phase sequence current from the sizes and amplitudes of vectors [<Id2>, <Iq2>] through the orthogonal coordinate-polar coordinate converting block 501.

The feedforward calculator 801 also uses the positive-phase sequence dq converting block 306 to perform negative-phase sequence dq conversion on phase voltages VSu, VSv, and VSw of the power supply system 101, and calculates a moving average in which a half cycle of the power supply system is handled as a time window through the moving average calculator 401, obtaining positive-phase sequence d-axis voltage <Vd1> and positive-phase sequence q-axis voltage <Vq1>. The feedforward calculator 801 also obtains positive-phase sequence voltage root-mean-square value V1 and negative-phase sequence voltage phase angle $\phi 1$ from the sizes and amplitudes of vectors [<Vd2>, <Vq2>] through the orthogonal coordinate-polar coordinate converting block 501.

The inventors found from I2, $\delta 2$, V1, and $\phi 1$ obtained above that active electric power that flows into the clusters 104 to 106 can be made zero by applying the circulating current command value feedforward term I0FF*, which has root-mean-square value I0 and phase angle $\delta 0$ represented by the equations below, to the clusters.

$$\{Eq.\ 11\}$$

$$I0 = I2$$

$$\{Eq.\ 12\}$$

$$\delta 0 = 2 \times \phi 1 - \delta 2 \pm \pi$$

Even if the above equations are rewritten as the equations below, they are mathematically equivalent. In the block diagram in FIG. 5, the equations below are used.

$$\{Eq.\ 13\}$$

$$I0 = -I2$$

$$\{Eq.\ 14\}$$

$$\delta 0 = 2 \times \phi 1 - \delta 2$$

The sine wave generator 502 generates the circulating current command value feedforward term I0FF* as a sine wave signal having root-mean-square value 10 and phase angle $\delta 0$.

The second embodiment is the same as the first embodiment except the control block (FIG. 3) and feedforward calculator 801, which have been described above.

{Embodiment 3}

A third embodiment of the present invention will be described below.

In the third embodiment, even if the three phases of the voltage of the power supply system 101 are unbalanced and include negative-phase sequence components, the effect that active electric power that flows into the clusters 104 to 106 and active electric power output from there can be made zero can be obtained as in the first and second embodiments.

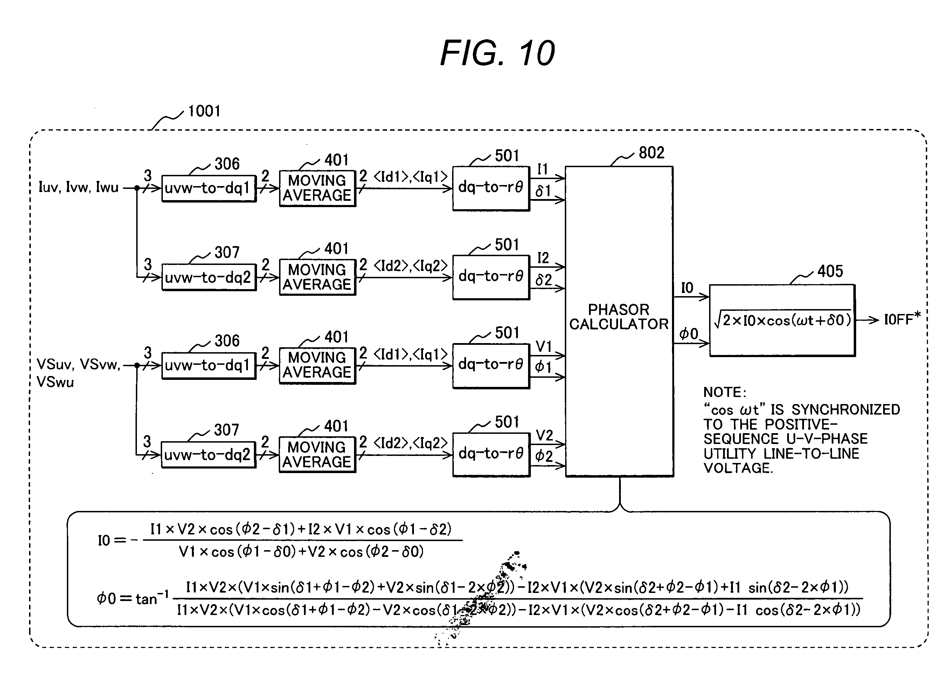

The third embodiment is characterized in that the feedforward calculator 801, shown in FIG. 9, in the second embodiment is replaced with a negative-phase sequence voltage ready feedforward calculator 1001 shown in FIG. 10.

The negative-phase sequence voltage ready feedforward calculator 1001 obtains positive-phase sequence d-axis current <Id1> and positive-phase sequence q-axis current <Iq1> from currents Iuv, Ivw, and Iwu through the positive-phase sequence dq converting block 306 and moving average calculator 401. The negative-phase sequence voltage ready feedforward calculator 1001 further obtains positive-phase sequence current root-mean-square value I1 and positive-phase sequence current phase angle $\delta 1$ from the sizes and amplitudes of vectors [<Id1>, <Iq1>] through the orthogonal coordinate-polar coordinate converter 501.

The negative-phase sequence voltage ready feedforward calculator 1001 obtains negative-phase sequence d-axis current <Id2> and negative-phase sequence q-axis current <Iq2> from currents Iu, Iv, and Iw through the negative-phase sequence dq converting block 307 and moving average calculator 401. The negative-phase sequence voltage ready feedforward calculator 1001 further obtains negative-phase sequence current root-mean-square value I2 and negative-phase sequence current phase angle $\delta2$ from the absolute value and angle of vector [<Id2>, <Iq2>] through the orthogonal coordinate-polar coordinate converter 501.

The negative-phase sequence voltage ready feedforward calculator 1001 obtains positive-phase sequence d-axis voltage <Vd1> and positive-phase sequence q-axis voltage <Vq1> from voltages VSuv, VSvw, and VSwu through the positive-phase sequence dq converting block 306 and moving average calculator 401. The negative-phase sequence voltage ready feedforward calculator 1001 further obtains positive-phase sequence voltage root-mean-square value V1 and positive-phase sequence voltage phase angle $\phi1$ from the absolute value and angle of vector [<Vd1>, <Vq1>] through the orthogonal coordinate-polar coordinate converter 501.

The negative-phase sequence voltage ready feedforward calculator 1001 obtains negative-phase sequence d-axis voltage <Vd2> and negative-phase sequence q-axis voltage <Vq2> from voltages VSuv, VSvw, and VSwu through the negative-phase sequence dq converting block 307 and moving average calculator 401. The negative-phase sequence voltage ready feedforward calculator 1001 further obtains positive-phase sequence voltage root-mean-square value V2 and positive-phase sequence voltage phase angle $\phi2$ from the sizes and amplitudes of vector [<Vd2>, <Vq2>] through the orthogonal coordinate-polar coordinate converter 501.

The inventors found that even if voltages VSuv, VSvw, and VSwu include negative-phase sequence components, active electric power that flows into the clusters and active electric power output from there can be made zero by giving the circular current command value feedforward term IOFF* having root-mean-square value I0 and phase angle $\delta0$, represented by the equations below, to the circular current controller 312.

$$\{Eq. \ 14\}$$

$$I0 = -(I1 \times V2 \times \cos(\delta1 - \phi2) + I2 \times V1 \times \cos(\delta2 - \phi1))/(V1 \times \cos(\delta0 - \phi1) + V2 \times \cos(\delta0 - \phi2))$$

$$\{Eq. \ 15\}$$

$$\delta0 = \tan^{-1}((I1 \times V2 \times (V1 \times \sin(\delta1 + \phi1 - \phi2) + V2 \times \sin(\delta1 - 2 \times \phi2)) - I2 \times V1 \times (V2 \times \sin(\delta2 + \phi2 - \phi1) + V1 \times \sin(\delta2 - 2 \times \phi1)))/(I1 \times V2 \times (V1 \times \cos(\delta1 + \phi1 - \phi2) + V2 \times \cos(\delta1 - 2 \times \phi2)) - I2 \times V1 \times (V2 \times \cos(\delta2 - \phi2 + \phi1) - V1 \times \cos(\delta2 - 2 \times \delta1))))$$

When the zero-phase having root-mean-square value I0 and phase angle $\delta0$, which are represented by the above equations, is superimposed on currents Iuv, Ivw, and Iwu, a phase difference between Vuv and Iuv, a phase difference between Vvw and Ivw, and a phase difference between Vwu and Iwu all become 90 degrees. That is, active electric power that flows into each cluster and active electric power output from there become zero, suppressing the DC voltage from being unbalanced.

Instead of an algorithm that is completely the same as in the block diagram shown in FIG. 10, the negative-phase sequence voltage ready feedforward calculator 1001 can also use another algorithm if signals that are mathematically equivalent to the equations in [Eq. 14] and [Eq. 15] can be output.

With the power converter 102 in this embodiment, the clusters 104 to 106 are connected to the power supply system 101 through their respective reactors 103.

The present invention can also be applied to a case in which the clusters 104 to 106 are each connected to the power supply system 101 through a transformer instead of the reactor 103.

The present invention can also be applied to a case in which the clusters 104 to 106 are each connected to the power supply system 101 through both the rector 103 and a transform.

{Reference Sings List}

101 ... power supply system, 102 ... power converter, 103 ... reactor, 104 ... uv-phase cluster, 105 ... vw-phase cluster, 106 ... wu-phase cluster, 107 ... unit cell, 201 ... x-phase upper element, 202 ... x-phase lower element, 203 ... y-phase upper element, 204 ... y-phase lower element, 205 ... DC capacitor, 301 ... low-pass filter (LPF), 302 ... average calculator, 303 ... total average DC voltage controller, 304 ... total average DC voltage control gain, 305 ... compensating current value calculator, 306 ... positive-phase sequence dq converting block, 307 ... negative-phase sequence dq converting block, 308 ... current controller, 309 ... voltage command value divider, 310 ... feedforward calculator, 311 ... cluster balancing controller, 312 ... circular current controller, 313 ... circular current control gain, 401 ... moving average calculator, 501 ... orthogonal coordinate-polar coordinate converter, 502 ... sine wave generator, 601 ... $\alpha\beta$ converting block, 602 ... orthogonal coordinate-polar coordinate converting block, 603 ... cluster balancing control gain, 801 ... feedforward calculator that uses actual currents, 1001 ... negative-phase sequence voltage ready feedforward calculator.

**Claims**

1. A power converter that has a delta-connected cascade multi-level converter (CMC) linked to a power supply system, the CMC being formed by delta-connecting series circuits, each of which is formed with a reactor and a cluster, the cluster being a series circuit formed with one or a plurality of unit cells, comprising a function by which a positive-phase sequence reactive current and a negative-phase sequence current caused by an unbalanced load linked to the power supply system are substantially compensated by a positive-phase sequence reactive current and a negative-phase sequence current that are simultaneously output by the power converter.

2. The power converter according to Claim 1, further comprising a function by which a voltage across a DC capacitor in each of the plurality of unit cells is balanced.

3. The power converter according to Claim 1 or 2, further comprising a function by which if the phase angle of the positive-phase sequence component included in a voltage of the power supply system is denoted $\phi1$ and the negative-phase sequence current command value of the power converter or the root-mean-square value of an actual negative-phase sequence current and the phase angle of the current are respectively denoted I2 and $\delta2$, each cluster flows a circular current having root-mean-square value I0 and phase angle $\delta0$, which are represented by equations below.

$$\{Eq.\ 1\}$$

$$I0\ =\ I2$$

$$\{Eq.\ 2\}$$

$$\delta0\ =\ 2\ \times\ \phi1\ -\ \delta2\ \pm\ \pi$$

4. The power converter according to any one of Claims 1 to 3, further comprising a function by which if the root-mean-square value and phase angle of the positive-phase sequence component included in the voltage of the power supply system are respectively denoted V1 and $\phi1$, the root-mean-square value and phase angle of the negative-phase sequence component included in the voltage of the power supply system are respectively denoted V2 and $\phi2$, the command value of the current that flows into the cluster or the root-mean-square value of the positive-phase sequence component of an actual current and the phase angle of the positive-phase sequence component are respectively denoted I1 and $\delta1$, and the root-mean-square value and phase angle of the negative-phase sequence component of the actual current are respectively denoted I2 and $\delta2$, each cluster outputs a circular current having root-mean-square value I0 and phase angle $\delta0$, which are substantially represented by equations below.

{Eq. 3}

$$I0 = -(I1 \times V2 \times \cos(\delta1 - \phi2) + I2 \times V1 \times \cos(\delta2 - \phi1))/(V1 \times \cos(\delta0 - \phi1) + V2 \times \cos(\delta0 - \phi2))$$

{Eq. 4}

$$\delta0 = \tan^{-1}((I1 \times V2 \times (V1 \times \sin(\delta1 + \phi1 - \phi2) + V2 \times \sin(\delta1 - 2 \times \phi2)) - I2 \times V1 \times (V2 \times \sin(\delta2 + \phi2 - \phi1) + V1 \times \sin(\delta2 - 2 \times \phi1)))/(I1 \times V2 \times (V1 \times \cos(\delta1 + \phi1 - \phi2) + V2 \times \cos(\delta1 - 2 \times \phi2)) - I2 \times V1 \times (V2 \times \cos(\delta2 - \phi2 + \phi1) - V1 \times \cos(\delta2 - 2 \times \delta1))))$$

5. The power converter according to any one of Claims 1 to 4, wherein
moving average calculation in which a half cycle of the frequency of the power supply system or an integer multiple of the half cycle is handled as a time window is used in detection of the voltages and currents as well as the phase angles of the voltages and currents ($V1$, $\phi1$, $V2$, $\phi2$, $I1$, $\delta1$, $I2$, and $\delta2$).

6. The power converter according to any one of Claims 1 to 3, wherein the unit cell is a single-phase full bridge.

7. The power converter according to any one of Claims 1 to 3, wherein a transformer is connected in series with the reactor.

# FIG. 1

# FIG. 2

FIG. 3

## FIG. 4

# FIG. 5

NOTE: "cos $\omega$t" IS SYNCHRONIZED TO THE POSITIVE-SEQUENCE U-V-PHASE UTILITY LINE-TO-LINE VOLTAGE.

# FIG. 6

NOTE:
"cos $\omega$t" IS SYNCHRONIZED
TO THE POSITIVE-
SEQUENCE U-V-PHASE
UTILITY LINE-TO-LINE
VOLTAGE.

EP 2 560 065 A1

# FIG. 7

FIG. 8

*FIG. 9*

EP 2 560 065 A1

## FIG. 10

NOTE:
"cos ωt" IS SYNCHRONIZED
TO THE POSITIVE-
SEQUENCE U-V-PHASE
UTILITY LINE-TO-LINE
VOLTAGE.

$$I0 = -\frac{I1 \times V2 \times \cos(\phi2 - \delta1) + I2 \times V1 \times \cos(\phi1 - \delta2)}{V1 \times \cos(\phi1 - \delta0) + V2 \times \cos(\phi2 - \delta0)}$$

$$\phi0 = \tan^{-1}\frac{I1 \times V2 \times (V1 \times \sin(\delta1 + \phi1 - \phi2) + V2 \times \sin(\delta1 - 2 \times \phi2)) - I2 \times V1 \times (V2 \times \sin(\delta2 + \phi2 - \phi1) + I1 \ \sin(\delta2 - 2 \times \phi1))}{I1 \times V2 \times (V1 \times \cos(\delta1 + \phi1 - \phi2) - V2 \times \cos(\delta1 - 2 \times \phi2)) - I2 \times V1 \times (V2 \times \cos(\delta2 + \phi2 - \phi1) - I1 \ \cos(\delta2 - 2 \times \phi1))}$$

| INTERNATIONAL SEARCH REPORT | International application No. |
|---|---|
| | PCT/JP2011/058567 |

A. CLASSIFICATION OF SUBJECT MATTER
*G05F1/70*(2006.01)i, *H02J3/26*(2006.01)i

According to International Patent Classification (IPC) or to both national classification and IPC

B. FIELDS SEARCHED

Minimum documentation searched (classification system followed by classification symbols)
G05F1/70, H02J3/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2007-280358 A (Tokyo Institute of Technology),<br>25 October 2007 (25.10.2007),<br>paragraphs [0020] to [0021], [0025]; fig. 4<br>(Family: none) | 1-2,5-7<br>3-4 |
| Y | JP 2008-199853 A (Hitachi, Ltd.),<br>28 August 2008 (28.08.2008),<br>paragraphs [0012] to [0017]; fig. 1 to 2<br>(Family: none) | 1-2,5-7 |
| Y | JP 2008-271634 A (Fuji Electric Systems Co., Ltd.),<br>06 November 2008 (06.11.2008),<br>paragraph [0020]<br>(Family: none) | 5 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>27 April, 2011 (27.04.11) | Date of mailing of the international search report<br>17 May, 2011 (17.05.11) |
|---|---|
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YOSHII ; INOUE ; AKAGI.** Transuresu kasukedo PWM STATCOM no chokuryudenatsuseigyoho no kento (Zero-sequence voltage control of a cascade PWM converter with star-configuration. *IEE-SPC and IEE-IEA materials, SPC-07-115/IEA-07-38,* 32-36